# EUROPEAN PATENT APPLICATION

(11) **EP 4 793 233 A1**
(43) Date of publication of application: **19.08.2026**
(21) Application number: 26156616.0
(22) Date of filing: 05.02.2026
(51) Int. Cl.: C01B 32/00, C04B 35/52, C04B 41/00, C04B 41/45, D01F 11/12, H01M 4/133, C04B 41/85, C04B 35/628

(54) **CARBON COMPOSITE MATERIAL**

(30) Priority: 14.02.2025 JP 2025021957
(71) Applicant: Toyota Jidosha Kabushiki Kaisha, Toyota-shi, Aichi-ken 471-8571 (JP)
(72) Inventor: OSADA, Naoki, Toyota-shi, 471-8571 (JP)
(74) Representative: Kuhnen & Wacker Patent- und Rechtsanwaltsbüro PartG mbB

(57) **Abstract**

A carbon composite material configured to suppress a decrease in the charge and discharge capacity of batteries, the carbon composite material comprising Si and a carbon material having an aspect ratio of 2.7 or more and 7.5 or less.

## Description

### TECHNICAL FIELD

The disclosure relates to a carbon composite material.

### BACKGROUND

Various studies have been proposed for carbon composite materials as disclosed in Patent Documents 1 to 4.
Patent Document 1: Japanese Patent No. 7311169
Patent Document 2: Japanese Patent Application Laid-Open (JP-A) No. 2002-260658
Patent Document 3: JP-A No. 2024-115207
Patent Document 4: International Publication No. WO2020/218021

In the prior art, a battery containing Si as an anode active material has the following problem: the Si becomes amorphous by virtue of its expansion and contraction due to charge and discharge of the battery, and the charge and discharge capacity of the Si-containing battery is decreased, accordingly.

### SUMMARY

The present disclosure was achieved in light of the above circumstances. An object of the present disclosure is to provide a carbon composite material configured to suppress a decrease in the charge and discharge capacity of batteries.

The present disclosure includes the following embodiments.
<1> A carbon composite material comprising Si and a carbon material having an aspect ratio of 2.7 or more and 7.5 or less.
<2> The carbon composite material according to the above <1>, wherein a crystallite size of the Si is from 1 nm to 1 µm, which is measured by X-ray diffraction (XRD).
<3> The carbon composite material according to the above <1>, wherein the Si is amorphous.
<4> The carbon composite material according to any one of the above <1> to <3>, wherein a content of the Si in the carbon composite material is from 1% by mass to 70% by mass.
<5> The carbon composite material according to the above <4>, wherein the content of the Si in the carbon composite material is from 10% by mass to 50% by mass.
<6> The carbon composite material according to any one of the above <1> to <5>, wherein an outermost surface thereof is coated with the carbon material.
<7> The carbon composite material according to any one of the above <1> to <6>, wherein the carbon material is a composite comprising a bundle of carbon fibers having pores, and a pore diameter of the pores is from 1 nm to 20 nm.
<8> The carbon composite material according to the above <7>, wherein a short axis direction length of the carbon fibers is from 0.1 µm to 3 µm, and a long axis direction length thereof is from 1 µm to 20 µm.
<9> The carbon composite material according to the above <7> or <8>, wherein the Si is loaded in the pores.

According to the present disclosure, a carbon composite material configured to suppress a decrease in the charge and discharge capacity of batteries, can be provided.

### BRIEF DESCRIPTION OF THE DRAWINGS

In the accompanying drawings,
FIG. 1 is a schematic view showing an example of the method for producing the carbon composite material of the present disclosure, and
FIG. 2 is a graph showing the relationship between the aspect ratio of each of the carbon materials used in Examples 1 to 3 and Comparative Examples 1 to 4 and the capacity retention rate of each of the batteries used therein.

### DETAILED DESCRIPTION

Hereinafter, the embodiments of the present disclosure will be described in detail. Matters that are required to implement the present disclosure (such as common structures and production processes of carbon composite materials not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.

In addition, dimensional relations (such as length, width and thickness) in the drawings do not reflect actual dimensional relations.

In the disclosed embodiments, an example of the method for calculating the average particle diameter of particles is as follows. First, for a particle shown in an image taken at an appropriate magnification (e.g., 50,000x to 1,000,000x) with a scanning electron microscope (hereinafter referred to as SEM), the diameter when the particle is considered spherical, is calculated. Such a particle diameter calculation by SEM observation is carried out on 2 to 300 particles of the same type, and the average of the diameters of the particles is determined as the average particle diameter.

According to the present disclosure, provided is a carbon composite material comprising silicon (Si) and a carbon (C) material having an aspect ratio of 2.7 or more and 7.5 or less.

According to the present disclosure, a desired number of electron conducting paths can be retained by combining the Si and the carbon material. In addition, since the carbon material has an aspect ratio of 2.7 or more, the expansion direction of the Si is limited, and allowing the Si to be in an amorphous form, which is due to its expansion and contraction, is suppressed. Accordingly, when the carbon composite material is used as an active material, a side reaction on the active material surface can be suppressed, and a decrease in the charge and discharge capacity of batteries using the active material can be suppressed during battery charge and discharge.

The carbon composite material of the present disclosure contains the Si and the carbon material.

The carbon composite material may be in a particulate form, a fiber form or the like.

The content of the Si in the carbon composite material (i.e., the amount of the Si loaded on the carbon material) may be, for example, 1% by mass or more, may be 10% by mass or more, may be 47% by mass or more, may be 70% by mass or less, may be 50% by mass or less, or may be 49% by mass or less. The content of the Si in the carbon composite material can be calculated by the following formula. $\begin{matrix}Si content \left(%\right) \\ = Mass of the si / \left(\begin{matrix}Mass of the carbon material + Mass of \\ the Si\end{matrix}\right) \times 100\end{matrix}$

The outermost surface of the carbon composite material may be coated with the carbon material.

The aspect ratio of the carbon material is only required to be 2.7 or more and 7.5 or less. The upper limit of the aspect ratio may be 4.2 or less.

The aspect ratio is obtained as follows: a SEM image of the section or surface of an electrode layer containing the carbon material or the carbon material in a powdery form is taken; from the particles shown in the image, 30 to 100 particles are extracted, and the average value of the aspect ratios of the 30 to 100 particles is calculated by image analysis; and the average value is determined as the aspect ratio of the carbon material. The aspect ratio is represented by the ratio of a/b where a is the long axis direction length of the carbon material and b is the short axis direction length thereof. When the carbon material has a thickness direction (e.g., a flake form), the thickness of the carbon material is determined as the short axis direction length b.

The aspect ratio of the carbon composite material may be the same as the aspect ratio of the carbon material. The aspect ratio of the carbon material may be considered as the aspect ratio of the carbon composite material.

The long axis direction length of the carbon material may be, for example, 0.1 µm or more, may be 1 µm or more, may be 5.6 µm or more, may be 10.6 µm or more, may be 100 µm or less, may be 20 µm or less, or may be 18.2 µm or less.

The long axis direction length of the carbon composite material may be the same as the long axis direction length of the carbon material. The long axis direction length of the carbon material may be considered as the long axis direction length of the carbon composite material.

As the carbon material, examples include, but are not limited to, natural graphite, artificial graphite, activated carbon, carbon fibers, mesocarbon microbeads (MCMB), hard carbon and soft carbon.

The form of the carbon material is not particularly limited. The carbon material may be in a particulate form, a flake form, a plate form, a fiber form or the like. The carbon material may be carbon particles, carbon fibers or the like.

The carbon fibers may be obtained by carbonizing a carbon fibers raw material such as polyacrylonitrile (PAN) resin fiber and cellulose nanofiber. The carbonization condition may be heat-treatment of the carbon fibers raw material in an inert gas atmosphere at 1000°C to 1500°C.

Also, the carbon fibers may be a carbon material having a mesoporous structure, such as ordered mesoporous carbon (CMK-3). As the carbon fibers, carbon nanofiber, carbon nanotube or the like may be used.

The carbon material may be a composite comprising a bundle of carbon fibers. Since it is such a composite, the expansion direction of the Si is more limited, and allowing the Si to be in an amorphous form, which is due to its expansion and contraction, is more suppressed.

The carbon fibers may have at least one pore, or it may have pores.

The pores of the carbon fibers may be sequentially aligned in the long axis direction.

The pore diameter of the pores of the carbon fibers may be from 1 nm to 20 nm, for example.

The short axis direction length (width) of the carbon fibers may be from 0.1 µm to 3 µm, for example.

The long axis direction length of the carbon fibers may be, for example, 0.1 µm or more, may be 1 µm or more, may be 5.6 µm or more, may be 10.6 µm or more, may be 100 µm or less, may be 20 µm or less, or may be 18.2 µm or less.

The composite comprising the bundle of the carbon fibers can be obtained by utilizing, for example, aggregation in a poor solvent environment. For example, it is estimated that when the carbon fibers are reacted by strongly stirring them in a xylene solvent as the poor solvent, the carbon fibers aggregate by the action of functional groups (such as a -COOR group) present on the surface of the carbon fibers. A dispersion thus obtained is passed through a slit and quickly dried, thereby obtaining the composite comprising the bundle of the carbon fibers. As needed, the obtained composite may be cut or pulverized by mechanical milling or the like.

The Si may be amorphous or crystalline.

When the Si is crystalline, the crystallite size of the Si, which is measured by X-ray diffraction (XRD), may be from 1 nm to 1 µm.

The Si may be loaded on the surface of the carbon material. When the carbon material is the carbon fibers, the Si may be loaded on the surface of the carbon fibers and/or in the pores of the carbon fibers. After loading the Si on and/or in the carbon material, the surface of the Si may be coated with the carbon material.

The method for loading the Si on and/or in the carbon material is not particularly limited. As the loading method, examples include, but are not limited to, the following methods: chemical vapor deposition (CVD), immersion of the carbon material in a silicon melt, and formation of a silicon layer on and/or in the carbon material by using tetraethyl orthosilicate (TEOS).

As the CVD, examples include, but are not limited to, thermal CVD (chemical vapor deposition using thermal decomposition), PECVD (chemical vapor deposition using plasma or plasma-enhanced chemical vapor deposition) and ALD (atomic layer deposition). The use of thermal CVD is advantageous in that amorphous Si can be uniformly formed.

As the Si source used in the CVD, examples include, but are not limited to, silane (SiH₄) and halogenated silane (H₄₋ₓSiClₓ).

The components of the Si in the carbon composite material can be detected by inductively-coupled plasma (ICP) spectroscopy or a quantitative analysis method using an electron probe microanalyzer (EPMA) or the like.

The carbon composite material may be produced by loading silicon on a substrate comprising the carbon material.

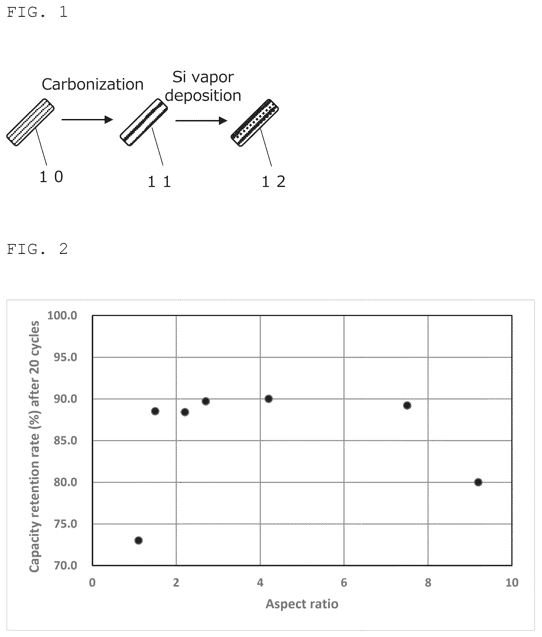

FIG. 1 is a schematic view showing an example of the method for producing the carbon composite material of the present disclosure.

As shown in FIG. 1, a carbon composite material 12 may be produced as follows: a carbon fibers raw material 10 is carbonized to form carbon fibers 11, in each of which pores are aligned in longitudinal direction, and Si is vapor-deposited in the pores of the carbon fibers 11.

The carbon composite material of the present disclosure is used as the anode active material of a battery.

The battery includes a cathode layer, an anode layer and an electrolyte layer. In general, the battery includes a cathode including a cathode layer and an anode including an anode layer.

According to the present disclosure, a decrease in the charge and discharge capacity of the battery can be suppressed by using the above-described carbon composite material as the anode active material of the battery.

### [Cathode]

The cathode includes the cathode layer. As needed, it further includes a cathode collector.

The cathode layer may be disposed on one surface of the cathode collector, or it may be disposed on both surfaces of the cathode collector. The cathode may have a multi-layered structure by forming two or more cathode layers on at least one surface of the cathode collector. In the case of forming two or more cathode layers, the cathode active materials contained in the cathode layers may be the same type of cathode active material, or they may be different types of cathode active materials.

The cathode layer is a layer which contains at least a cathode active material. As needed, the cathode layer may contain at least one selected from the group consisting of an electroconductive material and a binder.

As the cathode active material, examples include, but are not limited to, an oxide active material. As the oxide active material, examples include, but are not limited to, a layered rock salt-type active material such as LiCoO₂, LiMnO₂, LiNiO₂, LiVO2, LiNi_{1/3}Co_{1/3}Mn_{1/3}O₂ and LiNi_{0.8}Mn_{0.1}Co_{0.1}O₂, a spinel-type active material such as LiMn₂O₄, Li₄Ti₅O₁₂ and Li (Ni_{0.5}Mn_{1.5})O₄, and an olivine-type active material such as LiFePO₄, LiMnPO₄, LiNiPO₄ and LiCoPO₄.

The cathode active material is generally in a particulate form. The cathode active material may be primary particles, or it may be secondary particles (aggregated primary particles).

The average particle diameter of the cathode active material is not particularly limited. For example, the average particle diameter is 0.01 µm or more and 50 µm or less, or it may be 0.5 µm or more and 30 µm or less.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF).

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance, which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 µm or more and 1000 µm or less, for example. The thickness of the cathode layer may be 1 µm or more and 500 µm or less, or it may be 30 µm or more and 200 µm or less.

The method for producing the cathode layer is not particularly limited. For example, the production method may be a method including the steps of obtaining a cathode slurry by mixing the cathode active material and a solvent, applying the cathode slurry to a cathode collector and drying the applied slurry, thereby forming the cathode layer. To form the cathode layer, a press treatment (pressing the cathode layer in the thickness direction) may be performed. As the press treatment, examples include, but are not limited to, roller press and plate press.

As the solvent, examples include, but are not limited to, N-methylpyrrolidone (NMP), tetralin, diisobutyl ketone, butyl butyrate, mesitylene, heptane, dibutyl ether, decane, dodecane, isodecane and toluene. The solvent may contain two or more of these components.

As the material for the cathode collector, examples include, but are not limited to, SUS, Cr, Au, Pt, Zn, aluminum, copper, nickel, iron, titanium and carbon. The thickness of the cathode collector is 0.1 µm or more and 100 µm or less, for example. The form of the cathode collector may be a foil form, a plate form or the like. The plan view shape of the cathode collector is not particularly limited. As the shape, examples include, but are not limited to, a circular shape, an elliptical shape, a rectangular shape and any polygonal shape. The structure of the cathode collector may be such that a buffer layer, an elastic layer or a positive temperature coefficient (PTC) thermistor layer is disposed on the surface.

### [Anode]

The anode includes the anode layer. As needed, it further includes an anode collector.

The anode layer may be disposed on one surface of the anode collector, or it may be disposed on both surfaces of the anode collector. The anode may have a multi-layered structure by forming two or more anode layers on at least one surface of the anode collector. In the case of forming two or more anode layers, the anode active materials contained in the anode layers may be the same type of anode active material, or they may be different types of anode active materials.

The anode layer is a layer which contains at least an anode active material. As needed, the anode layer may contain at least one selected from the group consisting of an electroconductive material and a binder.

As the anode active material, the anode layer contains at least the carbon composite material of the present disclosure. As needed, it further contains an anode active material other than the carbon composite material. As the anode active material other than the carbon composite material, an active material that is known as an anode active material for batteries can be used. For example, the above-described carbon material can be used.

Of 100% by mass of the anode active material contained in the anode layer, the percentage of the carbon composite material may be 10% by mass or more, may be 20% by mass or more, may be 50% by mass or more, or may be 100% by mass or less.

The content of the anode active material in the anode layer may be 10% by mass or more, may be 20% by mass or more, may be 50% by mass or more, may be 100% by mass or less, may be 90% by mass or less, or may be 74.5% by mass or less.

As the electroconductive material and binder used in the anode layer, examples include, but are not limited to, those mentioned above as the electroconductive material and binder used in the cathode layer.

The percentage of the electroconductive material in the anode layer may be 0.1% by mass or more and 5% by mass or less, for example.

The percentage of the binder in the anode layer may be 0.5% by mass or more and 15% by mass or less, for example.

As the material for the anode collector, examples include, but are not limited to, SUS, aluminum, copper, nickel, iron, titanium and carbon. The thickness of the anode collector varies depending on the form. For example, the thickness may be in a range of from 1 µm to 50 µm. The form of the anode collector may be a foil form, a plate form or the like. The plan view shape of the anode collector is not particularly limited. As the shape, examples include, but are not limited to, a circular shape, an elliptical shape, a rectangular shape and any polygonal shape. The structure of the anode collector may be such that a buffer layer, an elastic layer or a PTC thermistor layer is disposed on the surface.

### [Electrolyte layer]

The electrolyte layer is a layer formed between the cathode layer and the anode layer, and it contains at least an electrolyte. The electrolyte may be a liquid electrolyte (an electrolytic solution).

The electrolyte layer may contain an electrolytic solution and so on.

As the electrolytic solution, a non-aqueous electrolytic solution or the like can be used.

As the non-aqueous electrolytic solution, one containing a lithium salt and a non-aqueous solvent is generally used.

As the lithium salt, examples include, but are not limited to, inorganic lithium salts such as LiPF₆, LiBF₄, LiClO₄ and LiAsF₆, and organic lithium salts such as LiCF₃SO₃, LiN(SO₂CF₃)₂(Li-TFSI), LiN(SO₂C₂F₅)₂ and LiC (SO₂CF₃)₃.

As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), γ-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.

The concentration of the lithium salt in the non-aqueous electrolytic solution may be from 0.3 M to 5 M, for example.

As the electrolyte layer, a separator which is impregnated with the above-mentioned electrolytic solution and is configured to prevent contact between the cathode layer and the anode layer, may be used.

The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric or a glass fiber non-woven fabric.

The thickness of the electrolyte layer is 0.1 µm or more and 100 µm or less, for example. The thickness of the electrolyte layer may be 0.1 µm or more and 50 µm or less, or it may be 0.1 µm or more and 30 µm or less.

In the present disclosure, the battery may further include a fixing jig for applying a fixing pressure to the cathode layer, the electrolyte layer and the anode layer along the thickness direction. The fixing pressure is 0.1 MPa or more, for example. It may be 1 MPa or more, or it may be 5 MPa or more. On the other hand, the fixing pressure is 100 MPa or less, for example. It may be 50 MPa or less, or it may be 20 MPa or less.

### [Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution. The liquid battery may be a non-aqueous liquid battery in which the electrolyte layer contains a non-aqueous liquid electrolyte. In the present disclosure, the battery may be a primary battery or a secondary battery. Among them, it may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

When the battery is a cell stack consisting of stacked cells, the cell stack may be a monopolar cell stack or a bipolar cell stack.

As the applications of the battery, examples include, but are not limited to, the power sources of vehicles such as a hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as an information processing device.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

### EXAMPLES

### (Example 1)

### [Preparation of carbon fibers]

As a carbon fibers raw material, PAN resin fibers were carbonized by heat-treatment in an inert gas (Ar gas) atmosphere at 1500°C, thereby preparing carbon fibers having pores.

The aspect ratio of the carbon fibers was 2.7. The long axis direction length of the carbon fibers was 5.6 µm.

### [Production of a composite comprising a bundle of the carbon fibers]

Using the carbon fibers, a composite comprising a bundle of the carbon fibers was produced by the following method. The carbon fibers were stirred in a xylene solvent as a poor solvent. A dispersion thus obtained was passed through a slit and quickly dried, thereby obtaining a composite comprising a bundle of the carbon fibers. The obtained composite was used as a carbon material.

### [Production of carbon composite material]

Silicon was loaded on and in the carbon material as follows by thermal CVD.

The carbon material was placed in a chamber. While supplying a gas flow into the chamber, which served as a Si source, a temperature required for thermal decomposition (700°C) was applied to the carbon material. Accordingly, Si particles were loaded on the surface of and in the pores of the carbon material, thereby obtaining carbon composite material particles (silicon-carbon composite material particles). The components of the loaded Si were found out by ICP spectrometry. The content of the Si in the carbon composite material was 48%. The crystallite size of the Si was measured by XRD. As a result, the crystallite size was equal to or less than the lower detection limit, and the Si was amorphous.

### (Example 2)

A carbon composite material was produced in the same manner as Example 1, except for the following: such carbon fibers having pores were used in the preparation of the carbon fibers, that had an aspect ratio of 4.2 and a long axis direction length of 10.6 µm. The content of the Si in the carbon composite material was 49%. The crystallite size of the Si was measured by XRD. As a result, the crystallite size was equal to or less than the lower detection limit, and the Si was amorphous.

### (Example 3)

A carbon composite material was produced in the same manner as Example 1, except for the following: such carbon fibers having pores were used in the preparation of the carbon fibers, that had an aspect ratio of 7.5 and a long axis direction length of 18.2 µm. The content of the Si in the carbon composite material was 47%. The crystallite size of the Si was measured by XRD. As a result, the crystallite size was equal to or less than the lower detection limit, and the Si was amorphous.

### (Comparative Example 1)

In the preparation of the carbon fibers, no carbon fibers were prepared. The above-described composite was not produced, and such spherical Si particles were used in place of the carbon composite material, that were crystalline particles having an aspect ratio of 1.1 and a long axis direction length of 8.2 µm.

### (Comparative Example 2)

A carbon composite material was produced in the same manner as Example 1, except for the following: in place of the carbon fibers having pores, such a particulate activated carbon having pores was prepared in the preparation of the carbon fibers, that had an aspect ratio of 1.5 and a long axis direction length of 8.6 µm; the above-described composite was not produced; and the prepared activated carbon was used as it was as the carbon material. The content of the Si in the carbon composite material was 48%. The crystallite size of the Si was measured by XRD. As a result, the crystallite size was equal to or less than the lower detection limit, and the Si was amorphous.

### (Comparative Example 3)

A carbon composite material was produced in the same manner as Example 1, except for the following: in place of the carbon fibers having pores, such a particulate activated carbon having pores was prepared in the preparation of the carbon fibers, that had an aspect ratio of 2.2 and a long axis direction length of 9.9 µm; the above-described composite was not produced; and the prepared activated carbon was used as it was as the carbon material. The content of the Si in the carbon composite material was 49%. The crystallite size of the Si was measured by XRD. As a result, the crystallite size was equal to or less than the lower detection limit, and the Si was amorphous.

### (Comparative Example 4)

A carbon composite material was produced in the same manner as Example 1, except for the following: in place of the carbon fibers having pores, such a fibrous activated carbon having pores was prepared in the preparation of the carbon fibers, that had an aspect ratio of 9.2 and a long axis direction length of 40.1 µm; the above-described composite was not produced; and the prepared activated carbon was used as it was as the carbon material. The content of the Si in the carbon composite material was 47%. The crystallite size of the Si was measured by XRD. As a result, the crystallite size was equal to or less than the lower detection limit, and the Si was amorphous.

### [Production of anode]

Artificial graphite (as the first anode active material), the carbon composite material produced in Example 1 (as the second anode active material), SBR (as the first binder), polyacrylic acid (as the second binder) and carbon nanotube (as the electroconductive material) were used and mixed at a mass ratio of 70:27.5:1:1:0.05 (unit: %) to obtain a mixture. Distilled water was added to the obtained mixture. Then, these materials were sufficiently mixed by a mixer, thereby obtaining an anode paste. The anode paste was applied onto a copper foil (as the anode collector) by a doctor blade. The applied anode paste was dried at 100°C for 15 minutes to absolutely vaporize water, thereby obtaining an anode which an anode layer was formed on the anode collector. The produced anode was pressed by a biaxial roll press machine so that the density of the anode layer was 1.2 g/cm³.

Using the carbon composite materials of Examples 2 and 3 and Comparative Examples 1 to 4, anodes were produced and pressed in the same manner as described above.

### [Production of cathode]

A transition metal oxide LiNi_{0.8}Mn_{0.1}Co_{0.1}O₂ was used as the cathode active material. The cathode active material, the electroconductive material (acetylene black) and the binder (polyvinylidene fluoride) were mixed at a mass ratio of 95:2.5:2.5 (unit: %) to obtain a mixture. As a solvent, N-methylpyrrolidone was added to the obtained mixture. These materials were sufficiently mixed by a mixer, thereby obtaining a cathode paste. The cathode paste was applied onto an aluminum foil (as the cathode collector) by a doctor blade. The applied cathode paste was dried in an environment at 80°C for 15 minutes, thereby obtaining a cathode which a cathode layer was formed on the cathode collector. The produced cathode was pressed by a biaxial roll press machine so that the density of the cathode layer was 3.2 g/cm³. The capacity ratio of the cathode layer to the anode layer was adjusted so that the cathode capacity/anode capacity ratio was 1.1.

### [Separator]

As the separator, a separator which an alumina (Al₂O₃) modifying layer was loaded on a substrate (polyethylene) was used.

### [Electrolytic solution]

As the electrolytic solution, an ethylene carbonate-based solvent in which a lithium salt (lithium hexafluorophosphate (LiPF₆)) was contained at a concentration of 1.2 M, was prepared and used. The separator was impregnated with the electrolytic solution.

### [Production of battery]

The produced cathode, the separator impregnated with the electrolytic solution and the anode were stacked in this order, thereby producing a battery in a coin form.

### [Electrochemical evaluation]

The carbon composite materials of Examples 1 to 3 and Comparative Examples 1 to 4 were evaluated by using the batteries (electrochemical cells) using the carbon composite materials.

By a cycle life test, the produced batteries were measured for changes in the capacity retention rate during charge-discharge cycles.

The batteries were charged as follows. At a constant current, 0.3 C (C: hour rate capacity) was applied to each battery. After the battery voltage reached 4.2 V, the battery was charged by applying a constant voltage thereto until the current value became 0.01 C.

The batteries were discharged as follows. At a constant current, 0.3 C was applied to each battery. The battery was discharged until the battery voltage reached 2.5 V.

A pause for 10 minutes was provided between the charge and the discharge.

After repeating the charge and discharge for 20 cycles, the capacity of the battery was measured. The discharge capacity of the battery after the 20 cycles was divided by the discharge capacity thereof at the first cycle, thereby obtaining the capacity retention rate of the battery. The results are shown in Table 1.

**[Table 1]**

| | Aspect ratio of carbon material | Long axis direction length (µm) of carbon material | Crystallinity of Si | Si content (% by mass) | Capacity retention rate (%) after 20 cycles |
|---|---|---|---|---|---|
| Example 1 | 2.7 | 5.6 | Amorphous | 48 | 89.7 |
| Example 2 | 4.2 | 10.6 | Amorphous | 49 | 90.0 |
| Example 3 | 7.5 | 18.2 | Amorphous | 47 | 89.2 |
| Comparative Example 1 | 1.1 | 8.2 | Crystalline | 100 | 73.0 |
| Comparative Example 2 | 1.5 | 8.6 | Amorphous | 48 | 88.5 |
| Comparative Example 3 | 2.2 | 9.9 | Amorphous | 49 | 88.4 |
| Comparative Example 4 | 9.2 | 40.1 | Amorphous | 47 | 80.0 |

### [Results]

FIG. 2 is a graph showing the relationship between the aspect ratio of each of the carbon materials used in Examples 1 to 3 and Comparative Examples 1 to 4 and the capacity retention rate of each of the batteries used therein.

As shown in FIG. 2 and Table 1, it was proved that the capacity retention rate of the battery using the carbon composite material containing the Si and the carbon material having an aspect ratio of more than 1, is high compared to the battery using the Si particles.

### REFERENCE SIGNS LIST

- 10.: Carbon fiber raw material
- 11.: Carbon fiber
- 12.: Carbon composite material

## Claims

1. A carbon composite material (12) comprising Si and a carbon material having an aspect ratio of 2.7 or more and 7.5 or less.

2. The carbon composite material (12) according to claim 1, wherein a crystallite size of the Si is from 1 nm to 1 µm, which is measured by X-ray diffraction.

3. The carbon composite material (12) according to claim 1, wherein the Si is amorphous.

4. The carbon composite material (12) according to any one of claims 1 to 3, wherein a content of the Si in the carbon composite material (12) is from 1% by mass to 70% by mass.

5. The carbon composite material (12) according to claim 4, wherein the content of the Si in the carbon composite material (12) is from 10% by mass to 50% by mass.

6. The carbon composite material (12) according to any one of claims 1 to 5, wherein an outermost surface thereof is coated with the carbon material.

7. The carbon composite material (12) according to any one of claims 1 to 6, wherein the carbon material is a composite comprising a bundle of carbon fibers having pores, and a pore diameter of the pores is from 1 nm to 20 nm.

8. The carbon composite material (12) according to claim 7, wherein a short axis direction length of the carbon fibers is from 0.1 µm to 3 µm, and a long axis direction length thereof is from 1 µm to 20 µm.

9. The carbon composite material (12) according to claim 7 or 8, wherein the Si is loaded in the pores.
